(19) Europäisches Patentamt
European Patent Office
Office européen des brevets

(11) Veröffentlichungsnummer: **0 124 654**
**B1**

(12) # EUROPÄISCHE PATENTSCHRIFT

(45) Veröffentlichungstag der Patentschrift: **02.09.87**

(51) Int. Cl.⁴: **C 07 F 7/18**

(21) Anmeldenummer: **83113063.8**

(22) Anmeldetag: **23.12.83**

(54) **Verfahren zur Herstellung von schwefelhaltigen Organosiliciumverbindungen.**

(30) Priorität: **29.03.83 DE 3311340**

(43) Veröffentlichungstag der Anmeldung: **14.11.84 Patentblatt 84/46**

(45) Bekanntmachung des Hinweises auf die Patenterteilung: **02.09.87 Patentblatt 87/36**

(84) Benannte Vertragsstaaten: **AT BE CH DE FR GB IT LI NL**

(56) Entgegenhaltungen:
**DE-A-2 141 159**
**DE-A-2 542 534**
**DE-A-2 648 241**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft, Weissfrauenstrasse 9, D-6000 Frankfurt am Main 1 (DE)**

(72) Erfinder: **Panster, Peter, Dr., Im Lochseif 8, D-6458 Rodenbach (DE)**
Erfinder: **Michel, Rudolf, Josefstrasse 36, D-6463 Freigericht (DE)**
Erfinder: **Kleinschmit, Peter, Dr., Wildaustrasse 19, D-6450 Hanau 9 (DE)**
Erfinder: **Deschler, Ulrich, Dr., Birkenweg 1, D-6450 Hanau 9 (DE)**

**EP 0 124 654 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ein Verfahren zur Herstellung von schwefelhaltigen Organosiliciumverbindungen.

In der DE–A–2 141 159 ist ein Verfahren zur Herstellung von Bis(alkoxisilylalkyl)-oligosulfiden aus den entsprechenden Alkoxisilylalkylhalogeniden und Alkalimetalloligosulfiden vorzugsweise in alkoholischer Lösung, beschrieben. Wegen der leichten Hydrolysierbarkeit der Alkoxisilylgruppe muß diese Umsetzung stets unter nahezu wasserfreien Bedingungen durchgeführt werden.

Die Durchführung des Verfahrens wird auch dadurch erschwert, daß einerseits keine wasserfreien Alkalimetalloligosulfide verfügbar sind und erst aufwendig entwässert werden müßten, was bei deren leichter Hydrolysierbarkeit ebenfalls schwierig ist, und andererseits eine Darstellung bereits wasserfreier Oligosulfide mit der Entwicklung unangenehmer Nebenprodukte, z. B. insbesondere Schwefelwasserstoff, verbunden ist.

Analoges gilt auch für ein in der DE–A–2 141 160 beschriebenes Verfahren zur Herstellung von Bis-(alkoxisilylalkyl)-oligosulfiden, das eine Umsetzung von Alkoxisilylalkyl-mercaptanen mit Schwefeldihalogeniden vorsieht, oder für ein in der DE–A–2 405 758 beschriebenes Verfahren, das ebenfalls von Alkoxisilylalkyl-mercaptanen und Schwefel ausgeht, oder für ein in der DE–A–2 542 534 beschriebenes Verfahren, das von Alkoxisilylalkyl-halogeniden Metall- bzw. Ammoniumhydrogensulfiden und Schwefel ausgeht.

Nach einem in der DE–A–2 712 866 beschriebenen Verfahren setzt man ein Alkalimetallalkoholat mit einem Alkoxisilylorganylhalogenid, Metall- bzw. Ammoniumhydrogensulfid und Schwefel in Gegenwart eines organischen Lösungsmittels um.

Die Herstellung der Alkalimetallalkoholatlösung ist jedoch mit einem so großen Zeitaufwand verbunden, der eine technische Realisierung des Verfahrens unwahrscheinlich werden läßt.

Aufgabe der Erfindung ist ein Verfahren zur Herstellung von schwefelhaltigen Organosiliciumverbindungen, bei der die Entwicklung von Schwefelwasserstoff vermieden wird, und das gleichzeitig eine zeitsparende Herstellung von oligo- und monosulfidischen Verbindungen ermöglicht.

Gegenstand der Erfindung ist ein Verfahren zur Herstellung von schwefelhaltigen Organosiliciumverbindungen der Formel

$$\text{Z-Alk-S}_x\text{-Alk-Z} \qquad (1)$$

in der Z für Gruppierungen

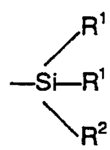
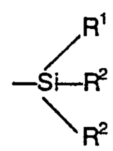
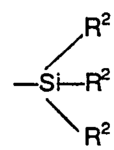

steht, in denen

$R^1$ für eine lineare oder verzweigte Alkylgruppe mit 1-5 C-Atomen, einen Cycloalkylrest mit 5-8 C-Atomen, den Benzylrest oder den gegebenenfalls durch Methyl, Ethyl oder Chlor substituierten Phenylrest,

$R^2$ für eine Alkoxigruppe mit linearer oder verzweigter Kohlenstoffkette mit 1-5 C-Atomen oder für eine Cycloalkoxigruppe mit 5 bis 8 C-Atomen, die Phenoxigruppe oder die Benzyloxigruppe stehen,

wobei $R^1$ und $R^2$ jeweils gleiche oder verschiedene Bedeutung haben können,

Alk einen zweiwertigen gesättigten linearen oder verzweigten Kohlenwasserstoffrest mit 1-10 Kohlenstoffatomen oder falls x vier ist und die Substituenten $R_1$ und $R_2$ in Z eine Ethoxigruppe, darstellen

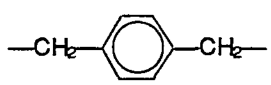

darstellt und

x eine Zahl von 1,0 - 6,0 sein kann, das dadurch gekennzeichnet ist, daß man ein Hydrogensulfid der Formel

$$\text{MeSH} \qquad (2)$$

in der Me ein Alkalimetall oder ein Äquivalent eines Erdalkalimetallatoms oder des Zinks oder Ammonium darstellt, teilweise oder vollständig in einem polaren organischen Lösungsmittel löst, diese Dispersion bzw. Lösung zunächst mit einem Alkalimetall, nach Beendigung der $H_2$-Entwicklung, wenn $x > 1$ ist, mit der erforderlichen Menge Schwefel versetzt und gleich anschließend weiter mit einer Verbindung gemäß der allgemeinen Formel

$$\text{Z-Alk-Hal} \qquad (3)$$

in der Z und Alk oben angegebene Bedeutungen haben und Hal ein Chlor- oder Bromatom ist, umsetzt, von dem gebildeten Halogenid abtrennt und das organische Lösungsmittel entfernt.

Die Ausgangssubstanzen gemäß Formel (3) können nach bekannten Verfahren hergestellt werden und sind

allgemein verfügbar.

Als Alkalimetall wird vorzugsweise Kalium oder Natrium verwendet auch wenn Me aus Formel (2) eine andere Bedeutung besitzt.

Als organische Lösungsmittel sind im Prinzip alle polaren Substanzen einsetzbar in denen das Hydrogensulfid gemäß Formel (2) wenigstens teilweise löslich ist, und die nicht mit der Organosiliciumverbindung gemäß Formel (3) reagieren.

Vorzugsweise kommt als organisches Lösungsmittel ein linearer oder verzweigter Alkohol mit 1-5 C-Atomen wie z. B. Methyl-, Ethyl-, Propyl-, Butyl- oder Pentylalkohol zum Einsatz. Geeignet sind auch Cycloalkylalkohole mit 5-8 C-Atomen, Phenol oder Benzylalkohol.

Sinnvollerweise wird, um z. B. eine Umesterung zu vermeiden, der jeweils zur Gruppe $R^2$ korrespondierende Alkohol verwendet. Gegebenenfalls kann auch die Verwendung eines Gemischs dieser Alkohole von Vorteil sein, z. B. wenn $R^2$ in einer Verbindung unterschiedliche Bedeutungen besitzt.

Bei der Ausführung des erfindungsgemäßen Verfahrens werden vorzugsweise Natrium-, Kalium-, Calcium- oder Ammoniumhydrogensulfid als Verbindungen gemäß Formel (2) verwendet.

Zur Ausführung der erfindungsgemäßen Reaktion wird der elementare Schwefel vorteilhafterweise in feinverteilter Form eingesetzt, zum Beispiel als handelsübliches Schwefelpulver. Auch das Hydrogensulfid wird zur Beschleunigung des Reaktionsablaufes vorzugsweise in Pulverform eingesetzt.

In den Formeln (1) und (3) bedeutet Alk Methylen sowie vorzugsweise Ethylen, i-Propylen, n-Propylen, i-Butylen oder n-Butylen, kann aber auch n-Pentylen, 2-Methylbutylen, 3-Methylbutylen, n-Pentylen, 1,3-Dimethylpropylen und 2,3-Dimethylpropylen bedeuten. Besonders geeignet ist n-Propylen.

Die Reaktion zwischen dem Hydrogensulfid und dem Alkalimetall setzt bereits bei Raumtemperatur spontan ein und verläuft innerhalb kürzester Zeit quantitativ und unter Erwärmung der Lösung. Zweckmäßigerweise wird zu einer Minimierung der Gesamtreaktionszeit bei erhöhter bzw. bis zum Siedepunkt des verwendeten Lösungsmittels gesteigerter Temperatur gearbeitet, soweit sich dies nicht nachteilig auf die Produktqualität oder die Sicherheit der Reaktionsführung auswirkt.

Weiterhin ist zu empfehlen, die Umsetzung unter Luft- und Wasser-(Feuchtigkeits)ausschluß durchzuführen, um die Bildung von Nebenprodukten zu unterdrücken bzw. weitgehend zu vermeiden. Man kann in der Phase der Wasserstoffentwicklung unter trockenem Schutzgas arbeiten. Auch kann es zweckmäßig sein, die Reaktion unter vermindertem Druck auszuführen; leicht erhöhter Druck wird ebenfalls nicht ausgeschlossen.

Bei diesem erfindungsgemäßen Vorgehen entsteht im Gegensatz zu einem Teil der vorstehend beschriebenen Synthesen für Bis(alkoxisilylalkyl)-oligosulfide kein Schwefelwasserstoff.

Gegenüber dem in der DE-A-2 712 866 beschriebenen Verfahren ist hervorzuheben, daß das erfindungsgemäße Verfahren mit einem erheblich geringeren Zeitbedarf durchzuführen ist und auch monosulfidische Verbindungen hergestellt werden können.

Die Gesamtreaktion läßt sich praktisch quantitativ ausgehend von z. B. Natriumhydrogensulfid und Natrium durch die Gleichung,

2 Z-Alk-Hal + NaSH + Na +(x-1)S

Z-Alk-$S_x$-Alk-Z + 1/2 $H_2$ + 2 NaHal

wobei x = 1,0 - 6,0 ist, beschreiben.

Aus der vorstehenden Gleichung ergeben sich auch die molaren Verhältnisse der Reaktionskomponenten. Nach deren vollständiger Vereinigung in der beschriebenen Reihenfolge ist eine Nachreaktionszeit, während der unter Rückfluß gerührt wird, von Vorteil. Nach beendeter Umsetzung wird das Reaktionsgemisch abgekühlt, von dem abgeschiedenen Salz abfiltriert und dann das organische Lösungsmittel destillativ entfernt, wobei zweckmäßig unter vermindertem Druck gearbeitet wird. Die als Endprodukte entstandenen, schwefelhaltigen Organosiliciumverbindungen mit Ausnahme der Monosulfidderivate können unter üblichen Bedingungen nicht ohne Zersetzung destilliert werden. Sie werden normalerweise im Destillationssumpf gesammelt und können in den meisten Fällen ohne Reinigung direkt der gewünschten Verwendung zugeführt werden. Sie können als Haftvermittler oder Verstärkungsadditive in silikatische Füllstoffe enthaltenden Kautschukmischungen eingesetzt werden.

**Beispiele**

Die generelle Verfahrensweise wird im Beispiel 1 ausführlich beschrieben, weitere unter Anwendung des erfindungsgemäßen Verfahrens beispielhaft synthetisierte, schwefelhaltige Organosilicumverbindungen der Formel (1) sind zusammen mit der Ansatzgröße, den verwendeten Ausgangssubstanzen und den Produktanalysendaten in tabellarischer Form angeführt.

**Beispiel 1**

In einem 10 l-Vierhalskolben, der mit KPG-Rührer, Innenthermometer, Rückflußkühler, Feststoff- bzw. Flüssigkeits-Dosiervorrichtung, einer $N_2$-Begasungsvorrichtung und einer Abgasleitung versehen war, wurden unter gleichzeitiger Zuführung von Stickstoff zunächst 4,25 l Ethanol und dann 310 g (5,25 Mol) ca. 95 %-iges Natriumhydrogensulfid vorgelegt. Zu der milchigen Lösung wurden 115 g (5,0 Mol) Natrium in Form eines

Stückes zugegeben. Unter kräftiger Wasserstoffentwicklung und Temperaturanstieg bis auf Rückflußtemperatur löste sich dieses innerhalb von 30 min auf. Zu der auf ca. 30°C abgekühlten Lösung wurden dann 481 g (15,0 Mol) Schwefel auf einmal zugesetzt und gleich anschließend mit der Dosierung von insgesamt 2408 g (10,0 Mol) Chlorpropyltriethoxisilan begonnen, wobei die Temperatur im Sumpf wieder bis auf Rückflußtemperatur anstieg. Nachdem nach ca. 50 min. die Silankomponente vollständig zugegeben war wurde die Mischung noch 1,5 h unter Rückfluß gerührt, dann abgekühlt, über ein Seitz-Druckfilter abfiltriert und das auf dem Filter verbliebene Salz mit 2 x 200 ml Ethanol ausgewaschen. Nachdem der Ethanol vom Filtrat am Rotationsverdampfer bei ca. 100 mbar Druck und bis zu einer Temperatur von 120°C entfernt worden war, verblieb als hellgelbe klare Flüssigkeit das gewünschte Produkt Bis(3-triethoxisilylpropyl)-tetrasulfid in einer Menge von 2,66 kg (98,7 % d. Theorie).

Die erwartete Struktur konnte NMR- und IR-spektroskopisch bestätigt werden. Der Brechungsindex $n_D^{21}$ wurde zu 1,4938 bestimmt.

Die Analysendaten lauteten:

| | %S | %C | %H | %Si |
|---|---|---|---|---|
| Theorie: | 23,79 | 40,12 | 7,86 | 10,42 |
| Gefunden: | 23,40 | 38,80 | 8,15 | 10,28 |

Nachstehende Beispiele 2-9 wurden analog zu Beispeil 1 durchgeführt. Sofern es sich dabei um Monosulfid-Derivate handelt, erfolgte nach der Abreaktion des Natriums natürlich kein weiterer Zusatz von Schwefel, sondern es wurde sofort mit der Zudosierung des Halogenorganylalkoxisilans zu der abgekühlten Sulfidlösung begonnen. Tabelle 1 enthält die wichtigsten Daten der Beispiele 2-9.

**Tabelle 1, Teil 1**

Ausgangssubstanzen

| Beispiel Nr. | Lösungsmittel (l) | Hydrogensulfid (g) | Schwefel (g) | Alkalimetall (g) | Silan (g) |
|---|---|---|---|---|---|
| 2 | $C_2H_5OH$<br>4,1 | NaSH (95 %-ig)<br>333 | – | Na<br>125 | $Cl(CH_2)_3Si(OC_2H_5)_3$<br>2720 |
| 3 | $C_2H_5OH$<br>4,1 | NaSH (95 %-ig)<br>333 | – | Na<br>125 | $Cl(CH_2)_8Si(OC_2H_5)_3$<br>3505 |
| 4 | $C_2H_5OH$<br>4,1 | NaSH (95 %-ig)<br>311 | 166,8 | Na<br>115 | $Cl(CH_2)_3Si(OC_2H_5)_3$<br>2536 |
| 5 | $CH_3OH$<br>4,1 | NaSH (95 %-ig)<br>310 | 321 | Na<br>115 | $Cl(CH_2)_3Si(OC_2H_3)_3$<br>1990 |
| 6 | $CH_3OH$<br>4,1 | KSH (94 %-ig)<br>384 | 481 | K<br>196 | $Cl(CH_2)_2Si(OCH_3)_3$<br>1707 |
| 7 | i-$C_3H_7OH$<br>4,1 | NaSH (95 %-ig)<br>310 | 160,3 | Na<br>115 | $Br(CH_2)_3Si(OC_3H_7)(C_2H_5)_2$<br>2673 |
| 8 | $C_2H_5OH$<br>4,1 | NaSH (95 %-ig)<br>310 | 321 | Na<br>115 | $Cl(CH_2)_5Si(OC_2H_5)_2(C_6H_5)$<br>3010 |
| 9 | $C_2H_5$<br>4,1 | NaSH (95 %-ig)<br>310 | 481 | Na<br>115 | $Cl-CH_2-$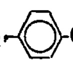$-CH_2Si(OC_2H_5)_3$<br>3028 |

**Tabelle 1, Teil 2**

Produkt

| Beispiel Nr. | Formel (g) | Analysendaten % S Theor. Gef. | % C Theor. Gef. | % H Theor. Gef. | % Si Theor. Gef. |
|---|---|---|---|---|---|
| 2 | $[(C_2H_5O)_3Si(CH_2)_3]_2S$ 2463 | 7,24 7,10 | 48,83 48,02 | 9,56 9,87 | 12,69 12,02 |
| 3 | $[(C_2H_5O)_3Si(CH_2)_8]_2S$ 3159 | 5,50 5,32 | 57,68 56,90 | 10,72 10,93 | 9,63 9,27 |
| 4 | $[(C_2H_5O)_3Si(CH_2)_3]_2S_2$ 2401 | 13,50 13,43 | 45,53 44,86 | 8,92 9,22 | 11,83 11,29 |
| 5 | $[(H_3CO)_3Si(CH_2)_3]_2S_3$ 2082 | 22,75 21,29 | 34,10 33,46 | 7,15 7,10 | 13,29 12,74 |
| 6 | $[(H_3CO)_3Si(CH_2)_2]_2S_4$ 2120 | 30,05 29,06 | 28,15 27,20 | 6,14 6,38 | 13,16 13,85 |
| 7 | $[(H_5C_2)_2(H_7C_3O)Si(CH_2)_3]_2S_2$ 2175 | 14,61 14,09 | 54,74 53,71 | 10,57 10,42 | 12,80 12,17 |
| 8 | $[(H_5C_6)(H_5C_2O)_2Si(CH_2)_5]_2S_3$ 3100 | 15,34 14,76 | 57,46 57,00 | 8,04 8,22 | 8,96 8,51 |
| 9 | $[(H_5C_2O)_3SiCH_2$ — 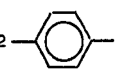 — $CH_2]_2S_4$ 3290 | 19,34 18,71 | 50,72 49,22 | 6,99 6,86 | 8,47 8,10 |

**Patentansprüche**

1. Verfahren zur Herstellung von schwefelhaltigen Organosiliciumverbindungen der formel

Z-Alk-$S_x$-Alk-Z (1)

in der Z für Gruppierungen

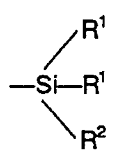

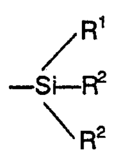

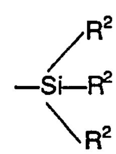

steht, in denen $R^1$ eine lineare oder verzweigte Alkylgruppe mit 1-5 C-Atomen, einen Cycloalkylrest mit 5-8 C-Atomen, den Benzylrest oder den gegebenenfalls durch Methyl, Ethyl oder Chlor substituierten Phenylrest darstellt.

$R^2$ für eine Alkoxigruppe mit linearer oder verzweigter Kohlenstoffkette mit 1-5 C-Atomen oder für eine Cycloalkoxigruppe mit 5-8 C-Atomen, die Phenoxigruppe oder die Benzyloxigruppe steht,

wobei $R^1$ und $R^2$ jeweils gleiche oder verschiedene Bedeutung haben können,

Alk einen zweiwertigen gesättigten linearen oder verzweigten Kohlenwasserstoffrest mit 1-10 C-Atomen oder falls X vier ist und die Substituenten $R_1$ und $R_2$ in Z eine Ethoxigruppe darstellen,

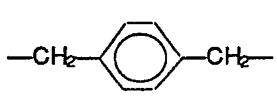

darstellt und

x eine Zahl von 1,0 - 6,0 sein kann, dadurch gekennzeichnet, daß man ein Hydrogensulfid der Formel

MeSH (2)

in der Me ein Alkalimetall oder ein Äquivalent eines Erdalkalimetallatoms oder des Zinks oder Ammonium darstellt, teilweise oder vollständig in einem polaren organischen Lösungsmittel löst, diese Dispersion bzw. Lösung zunächst mit einem Alkalimetall, nach Beendigung der $H_2$-Entwicklung mit der zur Einstellung der Zahl x gegebenenfalls erforderlichen Menge Schwefel versetzt und gleich anschließend weiter mit einer Verbindung gemäß der allgemeinen Formel

Z-Alk-Hal (3)

in der Z und Alk oben angegebene Bedeutungen haben, und Hal ein Chlor- oder Bromatom ist, umsetzt, von dem gebildeten Halogenid abtrennt und das organische Lösungsmittel entfernt.

2. Verfahren gemäß Anspruch 1, dadurch gekennzeichnet, daß man als Lösungsmittel jeweils mit dem Rest $R^2$ korrespondierende Alkohole bzw. aromatische Hydroxylverbindungen einsetzt.

3. Verfahren gemäß den Ansprüchen 1 und 2, dadurch gekennzeichnet, daß man als Alkalimetall Natrium oder Kalium einsetzt.

## Claims

1. A process for the production of sulphur-containing organosilicon compounds corresponding to the formula

$Z\text{-}Alk\text{-}S_x\text{-}Alk\text{-}Z$ (1)

in which Z represents the groupings

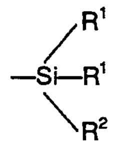 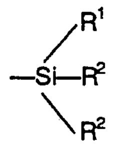 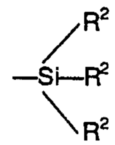

in which, $R^1$ represents a linear or branched alkyl group containing from 1 to 5 C-atoms, a cycloalkyl radical containing from 5 to 8 C-atoms, a benzyl radical or a phenyl radical optionally substituted by methyl, ethyl or chlorine,

$R^2$ represents an alkoxy group with linear or branched carbon chain containing from 1 to 5 C-atoms or a cycloalkoxy group containing from 5 to 8 C-atoms, a phenoxy group or a benzyloxy group,

wherein $R^1$ and $R^2$ can each have identical or different meanings,

Alk represents a divalent saturated linear or branched hydrocarbon radical containing from 1 to 10 C-atoms or, if x is 4 and the substituents $R_1$ and $R_2$ in Z represent an ethoxy group,

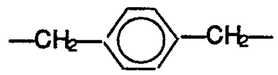

and x may be a number from 1.0 to 6.0, characterised in that a hydrogen sulphide corresponding to the formula

MeSH (2)

in which Me represents an alkali metal or an equivalent of an alkaline earth metal atom or zinc or ammonium is dissolved partially or completely in a polar organic solvent, this dispersion or solution is firstly reacted with an alkali metal after termination of $H_2$ evolution and with the quantity of sulphur possibly needed for adjusting the number x and is reacted immediately afterwards with a compound corresponding to the general formula

Z-Alk-Hal (3)

in which Z and Alk have the meanings given above and Hal is a chlorine or bromine atom, is separated from the halide formed and the organic solvent is removed.

2. A process according to claim 1, characterised in that alcohols corresponding to the radical $R^2$ or aromatic hydroxyl compounds are used as solvent in each case.

3. A process according to claims 1 and 2, characterised in that sodium or potassium is used as alkali metal.

## Revendications

1. Procédé pour la préparation de composés organosiliciques contenant du soufre, de formule:

$Z\text{-}Alk\text{-}S_x\text{-}Alk\text{-}Z$ (1)

dans laquelle Z représente les groupements

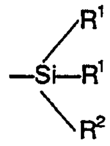

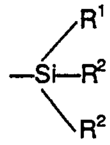

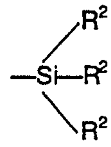

dans lesquels $R^1$ représente un groupe alkyle à chaine droite ou ramifiée ayant de 1 à 5 atomes de carbone, un reste cycloalkyle ayant de 5 à 8 atomes de carbone, le reste benzyle ou le reste phényle, éventuellement substitué par un groupe méthyle, éthyle ou un atome de chlore;

$R^2$ représente un groupe alcoxy à chaine carbonée droite ou ramifiée, ayant de 1 à 5 atomes de carbone, ou un groupe cycloalcoxy ayant de 5 à 8 atomes de carbone, le groupe phénoxy ou le groupe benzyloxy; $R^1$ et $R^2$ pouvant être identiques ou différents;

Alk représente un reste hydrocarboné bivalent à chaine droite ou ramifiée, ayant de 1 à 10 atomes de carbone, ou bien, au cas où x est 4 et les substituants $R^1$ et $R^2$ ou Z représentent un groupe éthoxy,

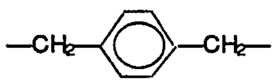

et x peut être un nombre allant de 1,0 à 6,0, procédé caractérisé en ce que l'on dissout, en partie ou complètement, dans un solvant organique polaire, un sulfure acide de formule:

MeSH (2)

dans laquelle Me representé un métal alcalin ou un équivalent d'un atome d'un métal alcalino-terreux ou du zinc ou l'ammonium, on ajoute tout d'abord à cette dispersion ou solution un métal alcalin, une fois terminé le dégagement de $H_2$, la quantité de soufre nécessaire également pour l'ajustement du nombre x, et on la fait réagir à nouveau, immédiatement après, avec un composé de formule générale:

Z-Alk-Hal (3)

dans laquelle Z et Alk ont les significations données plus haut, et Hal est un atome de chlore ou de brome, on sépare l'halogénure formé et on élimine le solvant organique.

2. Procédé selon la revendication 1, caractérisé en ce que l'on utilise en tant que solvant des alcools ou des composés hydroxylés aromatiques correspondants, comportant respectivement le reste $R^2$.

3. Procédé selon les revendications 1 et 2, caractérisé en ce que l'on utilise, en tant que métal alcalin, le sodium ou le potassium.